# EUROPÄISCHE PATENTSCHRIFT

(11) **EP 1 666 292 B1**
(45) Veröffentlichungstag und Bekanntmachung des Hinweises auf die Patenterteilung: **23.12.2009**
(21) Anmeldenummer: 05024963.0
(22) Anmeldetag: 15.11.2005
(51) Int. Cl.: B60J 7/00

(54) **Sonnenschutzsystem für ein Fahrzeugdach mit einem lichtdurchlässigen Deckel**
Sun shade system for a vehicle roof with transparent cover
Système de protection solaire pour un toit de véhicule avec un couvercle transparent

(30) Priorität: 06.12.2004 DE 202004018915 U
(43) Veröffentlichungstag der Anmeldung: 07.06.2006
(73) Patentinhaber: Webasto AG, 82131 Stockdorf (DE)
(72) Erfinder: Bergmiller, Alexander, 86343 Königsbrunn (DE); Schulz, Horst-Martin, 86947 Weil (DE)

(56) Entgegenhaltungen:
- EP-A- 1 375 306
- EP-A1- 0 640 506
- WO-A-90/00986
- DE-A1- 10 063 056
- DE-C1- 19 538 552
- FR-A1- 2 726 512

## Beschreibung

Die vorliegende Erfindung betrifft ein Sonnenschutzsystem für ein Fahrzeugdach mit einem einer Dachöffnung zugeordneten durchsichtigen oder durchscheinenden Deckel, umfassend eine an der Unterseite des Deckels lösbar montierbare, verstellbare Beschattungseinrichtung, wie etwa ein Schiebehimmel, ein Rollo oder dergleichen.

Im Allgemeinen ist einem durchsichtigen oder durchscheinenden Deckel in einem Fahrzeugdach ein Sonnenschutzsystem zugeordnet, um bei starker Sonneneinstrahlung die Wärmeentwicklung in der Fahrgastzelle in Grenzen zu halten. Derartige Sonnenschutzsysteme mit verstellbaren Beschattungselementen sind in zahlreichen Ausführungsvarianten bekannt. Dabei sind im allgemeinen die verstellbaren Beschattungselemente in einem fest am Fahrzeugdach angeordneten Rahmen gelagert und geführt, welcher für den Fall, dass auch der Deckel zwischen einer Schließstellung und einer Öffnungsstellung verschiebbar ist, mit einem Rahmen zur Lagerung und Führung des Deckels zu einem gemeinsamen Rahmen zusammengefasst ist. Ein Demontieren des Sonnenschutzsystems, beispielsweise zum Zwecke des Austausches gegen ein anderes, ist dabei im allgemeinen nicht vorgesehen und nicht möglich.

Es sind auch bereits Sonnenschutzsysteme bekannt, die direkt an der Unterseite eines lichtdurchlässigen Deckels lösbar montiert werden können. Die DE 195 38 552 C1 zeigt ein Sonnenschutzsystem der im Oberbegriff des Anspruches 1 genannten Art, bei welchem eine Sonnenblende zwischen zwei Seitenstreben aufgespannt ist, die auf an der Unterseite des Deckels angeordnete Rasthalterungen aufgeclipst werden können. In einer ersten Ausführungsform sind die Seitenkanten des Sonnensegels fest mit den zugeordneten Streben verbunden; in einer zweiten Ausführungsform ist in beiden Streben jeweils eine Rollowelle angeordnet, auf die eine über die Spannweite des Sonnensegels hinausgehende Rollotuchlänge aufgewickelt ist derart, dass durch Abwickeln des Rollotuches von einer Rollowelle und Aufwickeln auf die andere Rollowelle Bereiche unterschiedlicher Transparenz in ihre aktive Sonnenschutzstellung gebracht werden können. Um das Sonnenschutzsystem zu demontieren, werden die Streben einzeln von der Unterseite des Deckels gelöst, wobei die Streben nur noch über das Sonnensegel miteinander verbunden sind. Zum Montieren des Sonnenschutzsystems werden die Streben einzeln an der Unterseite des Deckels befestigt, wobei im Falle der zweiten Ausführungsform gegebenenfalls die durch die federbelasteten Rollowellen erzeugte Rollotuchspannung überwunden werden muss. Abgesehen davon, dass diese bekannten Sonnenschutzsysteme in ihrer Handhabung bei der Montage und Demontage wenig benutzerfreundlich sind, lassen sich mit diesen auch keine komplexeren Sonnenschutzsysteme verwirklichen, wie beispielsweise zwischen einer Schließstellung und einer Öffnungsstellung verstellbare Rollos oder Schiebehimmel, Sonnenschutzsysteme mit einem Kurbelantrieb oder einem elektromotorischen Antrieb usw.

Durch die EP 1 375 306 A1 ist bereits ein aus einer transparenten Glasscheibe und einer an deren Unterseite angeordneten Verdunkelungsvorrichtung gebildetes Dachmodul bekannt, wobei als Verdunkelungsvorrichtung auch ein zwischen einer Öffnungsstellung und einer Schließstellung verstellbares Rollo mit einem elektromotorischen Verstellantrieb vorgesehen ist. Bei dieser bekannten Konstruktion sind jedoch die Tragstreben und Führungsschienen sowie der Verstellantrieb für das Rollo jeweils einzeln durch Kleben unlösbar mit der als festes Dach ausgebildeten Glasscheibe verbunden, so dass eine Demontage der Verdunkelungsvorrichtung beispielsweise zum Zwecke des Austausches gegen eine andere nicht möglich ist. Selbst wenn anstelle der unlösbaren Klebeverbindung eine lösbare Verbindung, beispielsweise mittels Schrauben oder dergleichen, verwendet worden wäre, so wären bei einem Austausch der Verdunkelungsvorrichtung alle Funktionselemente einzeln zu demontieren bzw. zu montieren, womit ein normaler Nutzer des Fahrzeuges überfordert wäre.

Weitere Sonnenschutzsysteme sind aus der WO 90/00986 A1, EP 0640506 A1, DE 10063056 A1 und FR 2726512 bekannt.

Es ist die Aufgabe der vorliegenden Erfindung, ein Sonnenschutzsystem zu schaffen, welches in einfacher Weise zu montieren bzw. zu demontieren ist und bei welchem im wesentlichen alle bekannten Typen von Sonnenschutzsystemen, beispielsweise ein- oder mehrteilige Schiebehimmel; Lamellenhimmel oder Rollos, Verwendung finden können.

Diese Aufgabe ist erfindungsgemäß durch die im Anspruch 1 beschriebenen Merkmale gelöst.

Erfindungsgemäß ist die Beschattungseinrichtung als komplette Baueinheit mit einem am Deckel montierbaren starren Rahmen ausgebildet, in welchem die Beschattungselemente der Beschattungseinrichtung verschiebbar gelagert und geführt sind, und in welchem auch alle weiteren Funktionselemente der Beschattungseinrichtung, der elektrische Verstellantrieb für die Verstellung der Funktionselemente und dessen elektrische Kontaktierungseinrichtung, baulich integriert sind. Um diese Baueinheit am Deckel befestigen zu können, sind am Deckel einerseits und an dem Rahmen andererseits miteinander koppelbare bzw. voneinander lösbare Befestigungsmittel vorgesehen. Auf diese Weise lässt sich die komplette Beschattungseinrichtung mit einem einfachen Montagevorgang montieren, ohne einzelne Komponenten montieren bzw. demontieren zu müssen.

Im Sinne einer bedienerfreundlichen Handhabung sind die Befestigungsmittel beispielsweise als ohne Werkzeug handhabbare Schnellverbindungsmittel ausgelegt. Die Befestigung kann beispielsweise durch Stecken, Clipsen, mittels eines Bajonettverschlusses oder mittels Schauben erfolgen, die mit den Händen, einem Geldstück oder dergleichen angezogen oder gelöst werden können.

Gemäß vorliegender Erfindung ist an dem Rahmen eine Antriebseinrichtung zum Verstellen der Beschattungselemente angeordnet. Diese Antriebseinrichtung kann in einer besonders einfachen Ausgestaltung eine an sich bekannte Handkurbel sein, die beispielsweise über zug- und druckübertragende Kabel mit den verstellbaren Beschattungselementen verbunden ist. Erfindungsgemäß umfasst die Antriebseinrichtung einen mit den Beschattungselementen antriebsverbundenen elektrischen Antriebsmotor. Daher muss für die Stromversorgung des Antriebsmotors eine elektrische Verbindung zum elektrischen Stromkreis des Fahrzeuges herstellbar sein, die für den Fall, dass die Beschattungseinrichtung demontiert werden soll, lösbar sein muss. Zu diesem Zweck ist gemäß der Erfindung an dem Rahmen der Beschattungseinrichtung ein mit dem Antriebsmotor elektrisch verbundenes erstes Steckkupplungsteil angeordnet, welches mit einem mit dem elektrischen Stromkreis des Fahrzeuges elektrisch verbundenen zweiten Steckkupplungsteil kuppelbar ist.

Wiederum im Sinne einer besonders bedienerfreundlichen Handhabung ist das zweite Steckkupplungsteil zweckmäßigerweise so am Deckel angeordnet, dass es bei der Montage der Beschattungseinrichtung selbsttätig mit dem ersten Steckkupplungsteil in Kupplungseingriff kommt.

Falls es sich bei dem transparenten Deckel des Fahrzeuges um einen zwischen einer Schließstellung und einer Öffnungsstellung verschiebbaren Deckel handelt, muss die elektrische Verbindung des Antriebsmotors mit dem elektrischen Stromkreis des Fahrzeuges dieser Verschiebebewegung folgen können. Für diesen Fall ist vorgesehen, dass das zweite Steckkupplungsteil beispielsweise über ein Rollbandkabel oder dergleichen mit dem elektrischen Stromkreis des Fahrzeuges verbunden ist. In einer ersten Anordnungsvariante kann das zweite Steckkupplungsteil direkt am freien Ende des Rollbandkabels angeordnet sein und nach der Montage der Beschattungseinrichtung mit dem an dieser angeordneten ersten Steckkupplungsteil gekuppelt werden. Gemäß einer zweiten Anordnungsvariante kann das zweite Steckkupplungsteil am Deckel angeordnet und mit dem freien Ende des Rollbandkabels direkt ständig verbunden sein, wobei die beiden Steckkupplungsteile vorzugsweise bei der Montage der Beschattungseinrichtung selbsttätig miteinander in Kupplungseingriff gelangen.

Das Rollbandkabel gemäß der zweiten Anordnungsvariante kann auch durch eine Schleifkontaktanordnung ersetzt werden; dazu ist vorgesehen, dass das am Deckel angeordnete zweite Steckkupplungsteil über am Deckel einerseits und an den Führungsschienen für den Deckel andererseits angeordnete Schleifkontaktmittel mit dem Stromkreis des Fahrzeuges verbunden ist.

In einer bevorzugten Ausgestaltung der Erfindung umfasst der Rahmen der Beschattungseinrichtung zumindest einen quer zur Verstellrichtung der Beschattungselemente angeordneten Querschenkel und zwei damit fest verbundene Seitenschenkel, wobei sich die Seitenschenkel zumindest über die Länge des Verstellweges der Beschattungselemente erstrecken und jeweils eine Führungsschiene für eine seitliche Führung der Beschattungselemente aufweisen.

Die Antriebseinrichtung ist gemäß einer weiteren Ausgestaltung der Erfindung an einem Querschenkel des Rahmens angeordnet und über Übertragungsmittel mit den verschiebbaren Beschattungselementen antriebsverbunden.

Bei einem zwischen einer Öffnungsstellung und einer Schließstellung verschiebbaren Deckel ist die Verschiebemechanik und -lagerung im allgemeinen durch Blenden abgedeckt, die auch die zugeordneten Randbereiche des Deckels mit abdecken. Für diesen Fall ist vorgesehen, dass die Blenden lösbar am Fahrzeugdach angeordnet sind, und dass sie jeweils in einer ersten, deckelnahen Stellung und - beispielsweise unter Verwendung von Abstandhaltern, die bevorzugt von den Seitenschenkeln des Rahmens gebildet werden - in einer die zusätzliche Bauhöhe der Beschattungseinrichtung berücksichtigenden zweiten, deckelfernen Stellung montierbar sind.

Wenn das Beschattungssystem durch eine Rolloeinrichtung mit nicht mehr als zwei Rollowellen gebildet ist, dann können diese jeweils an einem Querschenkel des Rahmens so angeordnet bzw. in diesem so untergebracht werden, dass sie optisch nicht störend in Erscheinung treten bzw. die Durchsichtsfläche des Deckels nicht zusätzlich einengen.

Mehrere Ausführungsbeispiele der Erfindung sind in der Zeichnung dargestellt und im Folgenden näher beschrieben. Es zeigt:
- Fig. 1: eine perspektivische Ansicht eines Fahrzeugdaches von oben;
- Fig. 2: in einer perspektivischen Explosionsansicht einen transparenten Deckel für ein Fahrzeugdach und eine an diesem zu befestigende Beschattungseinrichtung;
- Fig. 3: in einer perspektivischen Ansicht eine Beschattungseinrichtung mit verschiebbaren Lamellen als Beschattungselementen;
- Fig. 4: eine Einzelheit der Fig. 3;
- Fig. 5: in einer perspektivischen Ansicht eine Beschattungseinrichtung mit einem Rollo als Beschattungselement;
- Fig. 6: in einem Längsschnitt schematisch eine Beschattungseinrichtung mit zwei Platten und einem dazwischen angeordneten Netz oder dergleichen.

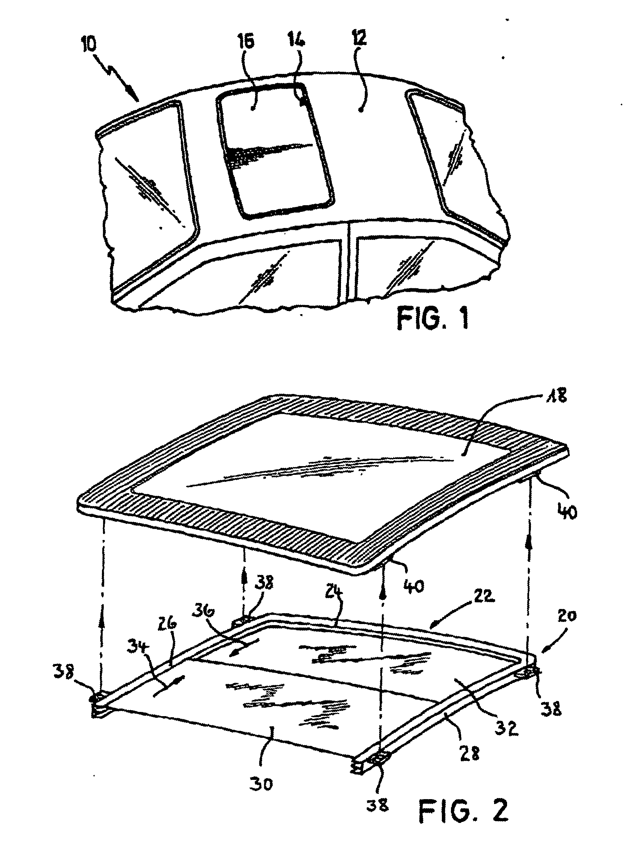

In Fig. 1 ist ein Fahrzeug 10 mit einem festen Fahrzeugdach 12 ausgestattet. In eine in dem Fahrzeugdach 12 vorgesehene Dachöffnung 14 ist ein Deckel 16 eingesetzt, bei welchem es sich um einen fest installierten Deckel oder um einen öffnungsfähigen Deckel, beispielsweise eines Hebedaches, eines Schiebedaches, eines Schiebehebedaches oder eines Spoilerdaches, handeln kann. Der Deckel 16 ist aus einem durchsichtigen oder durchscheinenden Werkstoff gefertigt, wie z.B. aus Glas oder Acrylglas.

Fig. 2 zeigt schematisch einen lichtdurchlässigen Deckel 18 für ein Fahrzeugdach, welcher wiederum ein fester oder zwischen einer Schließstellung und einer Öffnungsstellung verstellbarer Deckel sein kann.

Fig. 2 zeigt außerdem eine als Ganzes mit 20 bezeichnete Beschattungseinrichtung, welche an der Unterseite des Deckels 18 befestigt werden kann. Die Beschattungseinrichtung 20 umfasst einen starren Rahmen 22, welcher im vorliegenden Ausführungsbeispiel einen Querschenkel 24 sowie zwei mit diesem verbundene Seitenschenkel 26, 28 aufweist. Ein die freien Enden der Seitenschenkel 26, 28 miteinander verbindender zusätzlicher Querschenkel könnte vorgesehen sein, beispielsweise um den Rahmen 22 vor allem im demontierten Zustand zusätzlich zu stabilisieren, wie nicht weiter ausgeführt zu werden braucht.

Die Seitenschenkel 26, 28 bilden in an sich bekannter Weise Führungsschienen für wenigstens zwei plattenartige Beschattungselemente 30 bzw. 32, die in Richtung der zugeordneten Pfeile 34 zum Öffnen bzw. 36 zum Schließen der Beschattungseinrichtung verschiebbar sind. Die Beschattungselemente 30, 32 werden über an diesen angeordnete, elektrische Antriebseinrichtungen verstellt, wie an sich bekannt und deshalb nicht im einzelnen dargelegt ist.

An den Seitenschenkeln 26 bzw. 28 sind rahmenseitige Befestigungsmittel, im dargestellten Fall jeweils zwei Befestigungslaschen 38 vorgesehen, die mit an der Unterseite des Deckels in dessen Randbereich angeordneten deckelseitigen Befestigungsmitteln, im dargestellten Fall mit Gegenlagern 40 zur Aufnahme von Schrauben, Bajonettbolzen, Rastbolzen oder dergleichen gekoppelt werden können.

Wie bereits weiter vorne ausgeführt wurde, umfasst die Beschattungseinrichtung neben den wenigstens zwei Beschattungselementen 30, 32, von denen jede bevorzugt übereinander liegend in einer eigenen Führung am Rahmen 22 verschiebbar geführt ist, auch alle weiteren Funktionselemente, wie beispielsweise eine Antriebseinrichtung sowie Mittel für eine Antriebsverbindung zwischen der Antriebseinrichtung und den verschiebbaren Beschattungselementen 30, 32, wie in Fig. 2 nicht im einzelnen dargestellt ist.

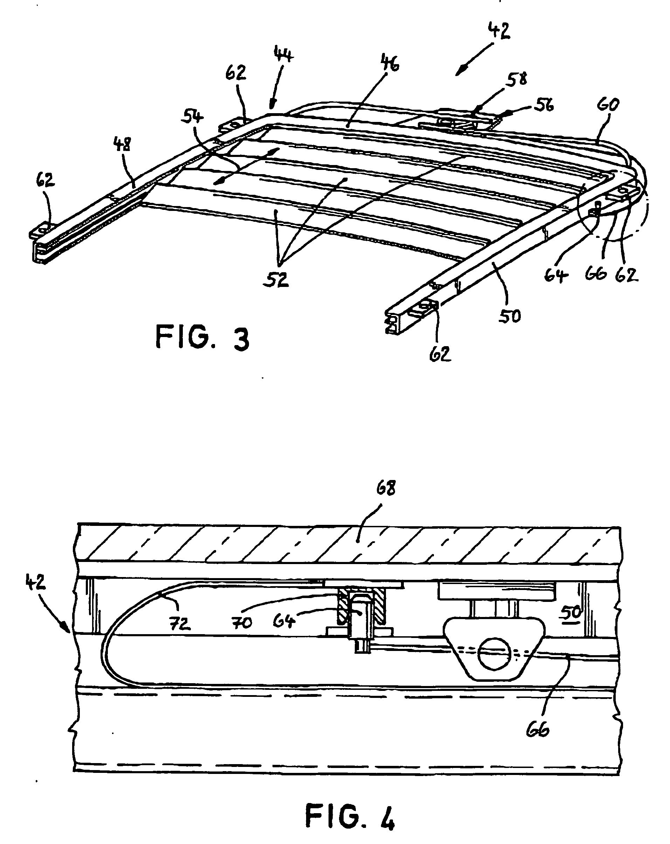

Die Beschattungseinrichtung 20 ist demnach für sich voll funktionsfähig und kann in einfacher Weise über die miteinander koppelbaren Befestigungsmittel (Befestigungslaschen 38, Gegenlager 40 an der Unterseite des Deckels 18 befestigt werden, wobei lediglich für die elektrische Antriebseinrichtung zum Verstellen der Beschattungselemente 30, 32 eine elektrische Verbindung zum elektrischen Stromkreis des Fahrzeuges hergestellt werden muss, wie anhand der Fig. 4 noch genauer erläutert wird.

Fig. 3 zeigt ein anderes Ausführungsbeispiel einer Beschattungseinrichtung 42 mit einem Rahmen 44, welcher wiederum einen Querschenkel 46 sowie zwei mit diesem verbundene Seitenschenkel 48 und 50 aufweist.

Die Seitenschenkel 48, 50 sind wiederum als Führungsschienen für eine verschiebbare Lagerung und Führung von Lamellen 52 ausgebildet, die in an sich bekannter Weise in Richtung des Doppelpfeiles 54 zwischen einer geschlossenen Stellung, bei der sie im wesentlichen in einer Ebene aneinander liegen, und einer zu einem Paket übereinander geschobenen Öffnungsstellung verschiebbar sind.

An dem Querschenkel 46 ist eine Antriebseinrichtung 56 angeordnet, die einen mit den Lamellen 52 antriebsverbundenen elektrischen Antriebsmotor 58 umfasst. Die Antriebsverbindung zwischen dem Antriebsmotor 58 und den Lamellen 52 umfasst zug- und druckübertragende Bürstenkabel 60, mittels derer die Lamellen 52 in Öffnungs- und Schließrichtung (Doppelpfeil 54) betätigt werden können.

An den Seitenschenkeln 48 und 50 des Rahmens 44 sind wiederum Befestigungslaschen 62 angeordnet, mittels derer die Beschattungseinrichtung 42 in der anhand der Fig. 2 beschriebenen Weise an der Unterseite eines transparenten Deckels befestigt werden kann.

Um den elektrischen Antriebsmotor 58 mit Strom zu versorgen, ist am Rahmen 44 ein mit dem Antriebsmotor 58 über ein Verbindungskabel 66 verbundenes erstes Steckkupplungsteil 64 angeordnet, welches mit einem in Fig. 3 nicht dargestellten, mit dem elektrischen Stromkreis der Fahrzeuges elektrisch verbundenen zweiten Steckkupplungsteil kuppelbar ist. Wie Fig. 3 erkennen lässt, ist das erste Steckkupplungsteil 64 in der Nähe einer der Befestigungslaschen 62 angeordnet, so dass die Kupplung der Steckkupplungsteile von der Bedienungsperson im Zuge der Kopplung der Befestigungslasche 62 mit dem am Deckel angeordneten Gegenlager 40 vorgenommen werden kann. Um für die Bedienungsperson auch das Kuppeln der Steckkupplungsteile zu erleichtern, ist gemäß einer weiteren, bevorzugten Ausgestaltung der Erfindung das zweite Steckkupplungsteil so am Deckel angeordnet, dass es bei der Montage der Beschattungseinrichtung selbsttätig mit dem ersten Steckkupplungsteil in Kupplungseingriff kommt.

Fig. 4 zeigt eine derartige Anordnung. Dem am Seitenschenkel 50 angeordneten, über das Verbindungskabel 66 mit einem Antriebsmotor verbundenen ersten Steckkupplungsteil 64 ist ein an einem Deckel 68 angeordnetes zweits Steckkupplungsteil 70 zugeordnet, welches bei der Montage der Beschattungseinrichtung 42 selbsttätig mit dem ersten Steckkupplungsteil 64 in Kupplungseingriff kommt. In entsprechender Weise kommen die Steckkupplungsteile 64, 70 bei der Demontage der Beschattungseinrichtung 42 selbsttätig wieder außer Eingriff.

Für den Fall, dass der Deckel zwischen einer Schließstellung und einer Öffnungsstellung verschiebbar ist, wobei er die an seiner Unterseite angeordnete Beschattungseinrichtung mitnimmt, muss für die Stromversorgung des Antriebsmotors eine Verbindung vorgesehen werden, die dieser Bewegung folgen kann. Fig. 4 zeigt eine derartige Anordnung.

Zu diesem Zweck ist das am Deckel 68 angeordnete zweite Steckkupplungsteil 70 über ein Rollbandkabel 72 mit dem elektrischen Stromkreis des Fahrzeuges verbunden, so dass die gesamte Steckkupplungsanordnung 64, 70 der Bewegung des Deckels 68 folgen kann, ohne dass die elektrische Verbindung unterbrochen wird. Eine andere, in der Zeichnung nicht dargestellte Lösung könnte darin bestehen, dass das zweite Steckkupplungsteil über am Deckel 68 einerseits und an den nicht dargestellten Führungsschienen für den Deckel andererseits angeordnete Schleifkontaktmittel mit dem Stromkreis des Fahrzeuges verbunden ist.

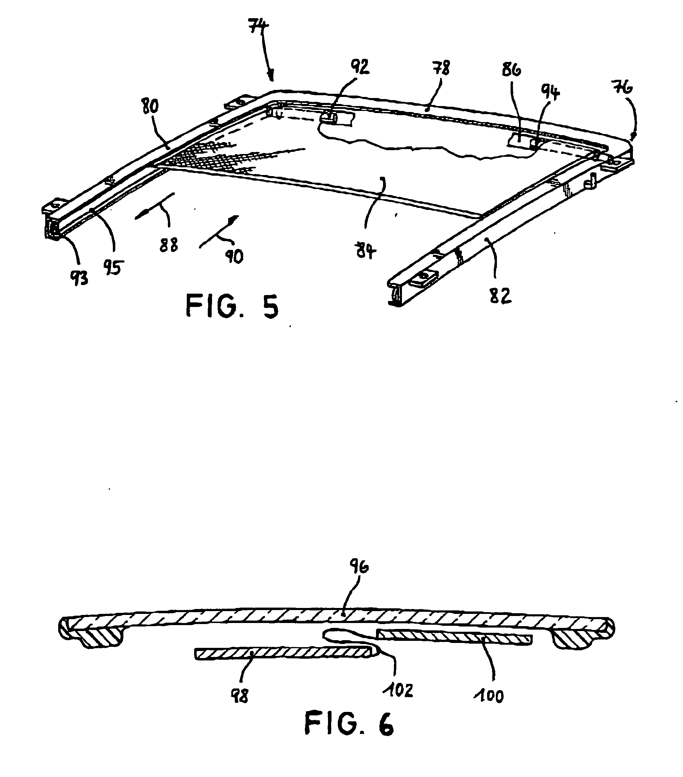

Fig. 5 zeigt eine Beschattungseinrichtung 74 mit einem Aufbau ähnlich den in den Fig. 2 und 3 gezeigten Beschattungseinrichtungen 20 bzw. 44. Sie umfasst wiederum einen Rahmen 76 mit einem Querschenkel 78 und zwei Seitenschenkeln 80, 82. Als Beschattungselement dient ein Rollotuch 84, welches von einer dem Querschenkel 78 zugeordneten Rollowelle 86 abwickelbar bzw. auf diese aufwickelbar ist. Der Antrieb des Rollotuches 84 in der Schließrichtung 88 in der Öffnungsrichtung 90 des Rollos erfolgt über in der Rollowelle 86 angeordnete Rohrmotoren 92 bzw. 94 und mit diesen verbundene, über Umlenkrollen 93 geführte Zugkabel 95, wie an sich bekannt ist und deshalb nicht im einzelnen erläutert wird.

Fig. 6 zeigt schematisch in einem Längsschnitt einen Deckel 96 sowie die Beschattungselemente einer unterhalb des Deckels 96 angeordneten Beschattungseinrichtung. Damit die Beschattungseinrichtung insbesondere im geöffneten Zustand eine möglichst geringe Bauhöhe hat, umfassen die Beschattungselemente wenigstens zwei verschiebbare, zum Öffnen übereinander schiebbare Himmelplatten 98 und 100 sowie eine dazwischen angeordnete Stoffbahn 102. Da die Stoffbahn 102 im geöffneten Zustand zur Bauhöhe der Beschattungseinrichtung nichts beiträgt, kann diese gering gehalten werden, was insbesondere in Verbindung mit einem Schiebedeckel oder einem Schiebehebedeckel günstig ist.

### Bezugszeichenliste

- 10: Fahrzeug
- 12: Fahrzeugdach
- 14: Dachöffnung
- 16: Deckel
- 18: Deckel
- 20: Beschattungseinrichtung
- 22: Rahmen
- 24: Querschenkel
- 26: Seitenschenkel
- 28: Seitenschenkel
- 30: Beschattungselemente
- 32: Beschattungselemente
- 34: Richtungspfeil
- 36: Richtungspfeil
- 38: Befestigungslasche (= Befestigungsmittel)
- 40: Gegenlager (= Befestigungsmittel)
- 42: Beschattungseinrichtung
- 44: Rahmen
- 46: Querschenkel
- 48: Seitenschenkel
- 50: Seitenschenkel
- 52: Lamellen (Beschattungselemente)
- 54: Doppelpfeil
- 56: Antriebseinrichtung
- 58: Antriebsmotor
- 60: Bürstenkabel (= Übertragungsmittel)
- 62: Befestigungslaschen
- 64: erster Steckkupplungsteil
- 66: Verbindungskabel
- 68: Deckel
- 70: zweiter Steckkupplungsteil
- 72: Rollbandkabel
- 74: Beschattungseinrichtung
- 76: Rahmen
- 78: Querschenkel
- 80: Seitenschenkel
- 82: Seitenschenkel
- 84: Rollotuch
- 86: Rollowelle
- 88: Schließrichtung
- 90: Öffnungsrichtung
- 92: Rohrmotor
- 93: Umlenkrollen
- 94: Rohrmotor
- 95: Zugkabel
- 96: Deckel
- 98: Himmelplatte
- 100: Himmelplatte
- 102: Stoffbahn

## Patentansprüche

1. Sonnenschutzsystem für ein Fahrzeugdach (12) mit einem einer Dachöffnung (14) zugeordneten durchsichtigen oder durchscheinenden Deckel, umfassend eine an der Unterseite des Deckels (16) lösbar montierbare, verstellbare Beschattungseinrichtung (20), die als komplette Baueinheit mit einem am Deckel (18) montierbaren starren Rahmen (22,44,76) ausgebildet ist, in welchem die Beschattungselemente (30,32,52) der Beschattungseinrichtung (20,42,74) verschiebbar gelagert und geführt sind, und in welchem alle Funktionselemente der Beschattungseinrichtung (20,42,74) baulich integriert sind, wobei an dem Rahmen (22,44,76) eine einen elektrischen Antriebsmotor (58) umfassende Antriebseinrichtung (56) zum Verstellen der Beschattungselemente (30,32,52,84) angeordnet ist und wobei an dem Rahmen (22,44,76) der Beschattungseinrichtung (20,42,74) ein mit dem Antriebsmotor (58) elektrisch verbundenes erstes Steckkupplungsteil (64) angeordnet ist, welches mit einem mit dem elektrischen Stromkreis des Fahrzeuges elektrisch verbundenen zweiten Steckkupplungsteil (70) kuppelbar ist.

2. Sonnenschutzsystem nach Anspruch 1,
**dadurch gekennzeichnet, dass** am Deckel (18) einerseits und an dem Rahmen (22) andererseits miteinander koppelbare bzw. voneinander lösbare Befestigungsmittel (40 bzw. 38) vorgesehen sind.

3. Sonnenschutzsystem nach Anspruch 2,
**dadurch gekennzeichnet, dass** die Befestigungsmittel (40 bzw. 38) als ohne Werkzeug handhabbare Schnellverbindungsmittel ausgelegt sind.

4. Sonnenschutzsystem nach einem der vorhergehenden Ansprüche,
**dadurch gekennzeichnet, dass** das zweite Steckkupplungsteil (70) so am Deckel (68) angeordnet ist, dass es bei der Montage der Beschattungseinrichtung selbsttätig mit dem ersten Steckkupplungsteil (64) in Kupplungseingriff kommt.

5. Sonnenschutzsystem nach einem der Ansprüche 1 bis 4,
**dadurch gekennzeichnet, dass** der Rahmen (22) der Beschattungseinrichtung (20) zumindest einen quer zur Verstellrichtung (34, 36) der Beschattungselemente (30, 32) angeordneten Querschenkel (24) und zwei damit fest verbundene Seitenschenkel (26, 28) umfasst, wobei sich die Seitenschenkel (26, 28) zumindest über die Länge des Verstellweges der Beschattungselemente (30, 32) erstrecken und jeweils eine Führungsschiene für eine seitliche Führung der Beschattungselemente aufweisen.

6. Sonnenschutzsystem nach Anspruch 5,
**dadurch gekennzeichnet, dass** die Antriebseinrichtung (56) an einem Querschenkel (46) des Rahmens (44) angeordnet und über Übertragungsmittel (60) mit den verschiebbaren Beschattungselementen (52) antriebsverbunden ist.

7. Sonnenschutzsystem nach einem der Ansprüche 5 oder 6,
**dadurch gekennzeichnet, dass** die Beschattungseinrichtung (74) eine Rolloeinrichtung mit wenigstens einer Rollowelle (86) umfasst, welche an einem Querschenkel (78) des Rahmens (76) angeordnet ist.

8. Fahrzeug mit einem Sonnenschutzsystem nach einem der Ansprüche 1 bis 4,
**dadurch gekennzeichnet, dass** das zweite Steckkupplungsteil (70) über ein Rollbandkabel (72) oder dergleichen mit dem elektrischen Stromkreis des Fahrzeuges verbunden ist.

9. Fahrzeug mit einem Sonnenschutzsystem nach einem der Ansprüche 1 bis 4,
**dadurch gekennzeichnet, dass** das zweite Steckkupplungsteil (70) über am Deckel einerseits und an den Führungsschienen für den Deckel andererseits angeordnete Schleifkontaktmittel mit dem Stromkreis des Fahrzeuges verbunden ist.

10. Fahrzeug mit einem Sonnenschutzsystem nach einem der Ansprüche 8 oder 9,
**dadurch gekennzeichnet, dass** dem Fahrzeugdach lösbare Blenden zur Abdeckung der Führungs- und/oder Verstellmechanik des verschiebbaren Deckels zugeordnet sind, welche alternativ in einer ersten, deckelnahen Stellung am Deckel (18) oder in einer die zusätzliche Bauhöhe der Beschattungseinrichtung berücksichtigenden zweiten, deckelfernen Stellung am Rahmen (22) montierbar sind.

## Claims

1. Sunshade system for a vehicle roof (12) with a transparent or see-through cover assigned to a roof opening (14), said sunshade system comprising an adjustable shading device (20) which can be fitted releasably on the lower side of the cover (18) and is designed as a complete constructional unit with a rigid frame (22, 44, 76) which can be fitted on the cover (18) and in which the shading elements (30, 32, 52) of the shading device (20, 42, 74) are displaceably mounted and guided, and in which all of the functional elements of the shading device (20, 42, 74) are structurally integrated, wherein a drive device (56) which comprises an electric drive motor (58) and is intended for adjusting the shading elements (30, 32, 52, 84) is arranged on the frame (22, 44, 76), and wherein a first plug-in coupling part (64) which is electrically connected to the drive motor (58) is arranged on the frame (22, 44, 76) of the shading device (20, 42, 74) and can be coupled to a second plug-in coupling part (70) which is electrically connected to the electric circuit of the vehicle.

2. Sunshade system according to Claim 1, **characterized in that** fastening means (40 and 38) which can be coupled to each other and can be released from each other are respectively provided on the cover (18) and on the frame (22).

3. Sunshade system according to Claim 2, **characterized in that** the fastening means (40 and 38) are designed as rapid-action connection means which can be handled without a tool.

4. Sunshade system according to one of the preceding claims, **characterized in that** the second plug-in coupling part (70) is arranged on the cover (68) in such a manner that it automatically comes into coupling engagement with the first plug-in coupling part (64) during the installation of the shading device.

5. Sunshade system according to one of Claims 1 to 4, **characterized in that** the frame (22) of the shading device (20) comprises at least one transverse limb (24) arranged transversely with respect to the adjustment direction (34, 36) of the shading elements (30, 32) and two side limbs (26, 28) connected fixedly to said transverse limb, the side limbs (26, 28) extending at least over the length of the adjustment path of the shading elements (30, 32) and each having a guide rail for lateral guidance of the shading elements.

6. Sunshade system according to Claim 5, **characterized in that** the drive device (56) is arranged on a transverse limb (46) of the frame (44) and is connected in terms of drive to the displaceable shading elements (52) via transmission means (60).

7. Sunshade system according to either of Claims 5 and 6, **characterized in that** the shading device (74) comprises a roller blind device with at least one roller blind shaft (86) which is arranged on a transverse limb (78) of the frame (76).

8. Vehicle with a sunshade system according to one of Claims 1 to 4, **characterized in that** the second plug-in coupling part (70) is connected to the electric circuit of the vehicle via a roll-up ribbon cable (72) or the like.

9. Vehicle with a sunshade system according to one of Claims 1 to 4, **characterized in that** the second plug-in coupling part (70) is connected to the electric circuit of the vehicle via sliding contact means arranged on the cover and on the guide rails for the cover.

10. Vehicle with a sunshade system according to either of Claims 8 and 9, **characterized in that** the vehicle roof is assigned releasable panels for covering the guiding and/or displacement mechanism of the displaceable cover, said panels being alternatively fittable on the cover (18) in a first position close to the cover, or on the frame (22) in a second position which takes into consideration the additional overall height of the shading device and is remote from the cover.

## Revendications

1. Système de protection solaire pour toit (12) de véhicule qui présente un couvercle transparent ou translucide associé à une ouverture (14) du toit, et comprenant un dispositif ajustable d'ombrage (20) monté de manière libérable sur le côté inférieur du couvercle (18) et configuré sous la forme d'un module complet muni d'un encadrement rigide (23, 44, 76) apte à être monté sur le couvercle (18),
les éléments d'ombrage (30, 32, 52) du dispositif d'ombrage (20, 42, 74) étant montés et guidés à coulissement et tous les éléments fonctionnels du dispositif d'ombrage (20, 42, 74) étant intégrés en un module,
un dispositif d'entraînement (56) comprenant un moteur d'entraînement (58) et destiné à déplacer les éléments d'ombrage (30, 32, 52, 84) étant disposé sur l'encadrement (22, 44, 76),
une première pièce d'accouplement enfichable (64) reliée électriquement au moteur d'entraînement (58) étant disposée sur l'encadrement (22, 44, 76) du dispositif d'ombrage (20, 42, 74) et pouvant être accouplée à une deuxième pièce d'accouplement enfichable (70) reliée électriquement au circuit de courant électrique du véhicule.

2. Système de protection solaire selon la revendication 1, **caractérisé en ce que** des moyens de fixation (40 ou 38) aptes à être accouplés les uns aux autres et à être libérés les uns des autres sont prévus d'une part sur le couvercle (18) et d'autre part sur l'encadrement (22).

3. Système de protection solaire selon la revendication 2, **caractérisé en ce que** les moyens de fixation (40 ou 38) sont conçus comme moyens de raccordement rapide aptes à être manipulés sans outil.

4. Système de protection solaire selon l'une des revendications précédentes, **caractérisé en ce que** la deuxième pièce d'accouplement enfichable (70) est disposée sur le couvercle (68) de telle sorte que lors du montage du dispositif d'ombrage, elle s'accouple automatiquement à la première pièce d'accouplement enfichable (64).

5. Véhicule doté d'un système de protection solaire selon l'une des revendications 1 à 4, **caractérisé en ce que** l'encadrement (22) du dispositif d'ombrage (20) comprend au moins un montant transversal (24) disposé transversalement par rapport à la direction d'ajustement (34, 36) des éléments d'ombrage (30, 32) et deux montants latéraux (26, 28) reliés solidairement aux montants transversaux, les montants latéraux (26, 28) s'étendant au moins sur la longueur du parcours de déplacement des éléments d'ombrage (30, 32) et présentant chacun un rail de guidage qui permet le guidage latéral des éléments d'ombrage.

6. Système de protection solaire selon la revendication 5, **caractérisé en ce que** le dispositif d'entraînement (56) est disposé sur un montant transversal (46) de l'encadrement (44) et est relié à entraînement aux éléments coulissants d'ombrage (52) par l'intermédiaire de moyens de transmission (60).

7. Système de protection solaire selon l'une des revendications 5 ou 6, **caractérisé en ce que** le dispositif d'ombrage (74) comprend un dispositif de volet déroulant qui présente au moins un arbre (86) de volet déroulant qui est disposé sur un montant transversal (78) de l'encadrement (76).

8. Véhicule doté d'un système de protection solaire selon l'une des revendications 1 à 4, **caractérisé en ce que** la deuxième pièce d'accouplement enfichable (70) est reliée au circuit de courant électrique du véhicule par un câble (72) en ruban enroulé ou similaires.

9. Véhicule doté d'un système de protection solaire selon l'une des revendications 1 à 4, **caractérisé en ce que** la deuxième pièce d'accouplement enfichable (70) est reliée au circuit de courant du véhicule par l'intermédiaire de moyens de contact glissant disposés sur le couvercle et sur les rails de guidage pour le couvercle.

10. Véhicule doté d'un système de protection solaire selon l'une des revendications 8 ou 9, **caractérisé en ce que** des écrans amovibles qui recouvrent le mécanisme de guidage et/ou de déplacement du couvercle coulissant sont associés au toit du véhicule et peuvent être montés soit sur le couvercle (18) dans une première position proche du couvercle soit sur l'encadrement (22) dans une deuxième position éloignée du couvercle et qui tient compte de la hauteur supplémentaire du dispositif d'ombrage lorsqu'il est monté.
